(19) Europäisches Patentamt
European Patent Office
Office européen des brevets

(11) **EP 3 273 273 A1**

(12) **EUROPEAN PATENT APPLICATION**

(43) Date of publication:
**24.01.2018 Bulletin 2018/04**

(51) Int Cl.:
**G01T 1/29** (2006.01)    **G01T 3/06** (2006.01)

(21) Application number: **17181828.9**

(22) Date of filing: **18.07.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.07.2016 JP 2016142148**

(71) Applicant: **Tokuyama Corporation
Shunan-shi
Yamaguchi 745-8648 (JP)**

(72) Inventors:
• **Ikeda, Yuichi
Shunan-shi, Yamaguchi 745-8648 (JP)**
• **Fukuda, Kentaro
Shunan-shi, Yamaguchi 745-8648 (JP)**

(74) Representative: **Schlief, Thomas P.
Canzler & Bergmeier
Patentanwälte Partnerschaft mbB
Friedrich-Ebert-Straße 84
85055 Ingolstadt (DE)**

(54) **WEARABLE NEUTRON DETECTOR**

(57)    In the prior art, plural detectors are arranged in order to specify the incident direction of neutron, and in principle for specifying the incident direction, the positions for arranging the detectors are predetermined or restricted, so that there is no flexibility in the arrangement. This causes large restriction on the appearance or the shape of a detector in designing, and it is difficult to adopt such a technique particularly for a wearable detector requiring a sufficient flexibility in shape to cope with the change of appearance shape.

By using plural neutron detection parts set to a moderator such as a human body, a water-containing substance, polyethylene or the like, and comparing the counts at the detection parts, the direction of a neutron radiation source can be specified. In addition, since arrangement of the plural neutron detection parts is not restricted as long as the detection parts do not overlap each other when they are set to the moderator, the detection parts can be set to a flexible material such as cloth, and therefore, a sufficient flexibility in shape to cope with the change of appearance shape can be given to the detector.

Fig. 1

EP 3 273 273 A1

**Description**

**Technical Field**

The present invention relates to a wearable neutron detector using a neutron scintillator. More particularly, the present invention relates to a wearable neutron detector capable of specifying the direction of a neutron radiation source.

**Background Art**

As techniques for detecting the incident direction of radiation, conventional techniques described in patent literatures 1 to 3 are known. In the technique described in the patent literature 1, in order to detect the incident direction of radiation, particularly, gamma radiation, plural pillar-like scintillators that are made of the same material and independent from one another are arranged by bundling them together so as to form one pillar. The plural scintillators are arranged side by side in such a manner that they form shadows on one another against the incident radiation, and thereby, a combination of ratios of radiation directly incident on the respective scintillators with that of radiation indirectly incident on them because of being hidden behind other scintillators is made to change according to the incident direction of radiation.

In the technique described in the patent literature 2, in order to detect the incident direction of neutron, disclosed is four omnidirectional neutron detectors arranged in a close-packed paired relationship with front-back and left-right symmetry to form a symmetric detector; and determining the incident direction of neutron from a vector synthesized from a difference of neutron counts from the detectors having the front-back symmetry and a difference of neutron counts from the detectors having said left-right symmetry.

In the technique described in the patent literature 3, by regularly arranging six neutron detectors so as to form an H shape, angular resolution is obtained from a difference between a count ratio of a detector facing the incident neutron and a count ratio of a detector shielded by the detector facing the incident neutron.

**Citation List**

**Patent Literature**

Patent literature 1:    Japanese Unexamined Patent Application Publication No. 2008-134200
Patent literature 2:    U.S. Patent No. 5,345,084
Patent literature 3:    U.S. Patent No. 5,659,177

**Summary of Invention**

**Technical Problem**

In the techniques of the patent literatures 1 to 3, plural detectors are arranged in order to specify the incident direction of neutron. In these literatures, however, in principle for specifying the incident direction, the positions for arranging the detectors are determined in advance or restricted, and there is no flexibility in the arrangement. This causes large restriction on the appearance or the shape in designing of the detector, and it is difficult to adopt such a technique particularly for a wearable detector which requires a sufficient flexibility in shape so that the detector can cope with a change in appearance shape attributable to a difference in a body shape of a wearer.

A wearable detector exhibits effectiveness particularly when detecting a nuclear material that is owned, concealed or hidden by a terrorist. In use of a conventional detector, a detector body is placed in a backpack or the like, and a detecting person carries the backpack on the back and goes around while searching for a nuclear material. In this case, carrying the detector can be easily seen by a third person and is conspicuous, resulting in a possibility of leading to a warning of a terrorist. A wearable detector is inconspicuous, and carrying the detector cannot be easily found from the appearance by a third parson. As a result, it becomes possible to search the nuclear material without leading to a warning of a terrorist.

The present invention has been made with the object of solving such problems as above, and provides a wearable neutron detector which can specify an incident direction of neutron and has less restriction on the arrangement of the detector.

## Solution to Problem

The present inventor has earnestly studied a wearable detector capable of specifying an incident direction of neutron. As a result, the present inventor has found that the direction of a neutron radiation source can be specified by using plural neutron detection parts set to a human body, a water-containing substance, polyethylene or the like, which has an action to moderate neutrons, (referred to as a "moderator" hereinafter), and comparing the counts at the detection parts. In addition, the present inventor has found that the plural neutron detection parts can be arranged without any restriction as long as they do not overlap each other when they are set to the moderator.

That is to say, the present invention provides a wearable neutron detector which is used by being worn and comprises plural neutron detection parts to be arranged at different positions when the detector is worn, a means to compare the counts of signals detected by the detection parts, and a means to specify a direction of a neutron radiation source from the comparison result.

In the wearable neutron detector of the present invention, the neutron detection parts are preferably fixed onto a flexible cloth-like material, and the flexible cloth-like material preferably has a shape of top clothing such as a shirt, a vest, a coat or a jacket.

## Advantageous Effects of Invention

According to the present invention, there is provided a wearable neutron detector which can specify a direction of a neutron radiation source and can be allowed to have a sufficient flexibility in shape so as to be able to cope with a change in appearance shape of the detector attributable to a body shape or the like of a wearer because there is less restriction on the arrangement of the neutron detection parts.

## Brief Description of Drawings

Fig. 1    is a view showing a manner in which the detection parts detect neutrons.
Fig. 2    is a group of views showing arrangement of two detection parts on a moderator and showing a positional relationship between a moderator and a radiation source.
Fig. 3    is a group of views showing arrangement of three detection parts on a moderator and showing a positional relationship between a moderator and a radiation source.
Fig. 4    is a group of views showing arrangement of four detection parts on a moderator and showing a positional relationship between a moderator and a radiation source.
Fig. 5    is a view showing three detection parts which are arranged one by one in three equally divided sections.
Fig. 6    is a view showing three detection parts arranged at equal intervals.
Fig. 7    shows spectra of intensity ratios depending on azimuth angle with respect to three detection parts.
Fig. 8    shows spectra of intensity ratios depending on elevation angles with respect to four detection parts are compared.
Fig. 9    is a group of views showing arrangement of four detection parts on a moderator in Examples 1 to 3.
Fig. 10   is a view showing a positional relationship between a moderator and a radiation source in Examples 1 to 3.
Fig. 11   shows pulse height distribution spectra obtained in Example 1.
Fig. 12   is a view showing an error at each azimuth angle determined by a method of least square in order to specify the direction of a radiation source of Example 1.
Fig. 13   is an enlarged view of the vicinity of an azimuth angle 0° of Fig. 12.
Fig. 14   shows pulse height distribution spectra obtained in Example 2.
Fig. 15   is a view showing an error at each azimuth angle determined by a method of least square in order to specify the direction of a radiation source of Example 2.
Fig. 16   is an enlarged view of the vicinity of an azimuth angle 90° of Fig. 15.
Fig. 17   shows pulse height distribution spectra obtained in Example 3.
Fig. 18   is a view showing an error at each azimuth angle determined by a method of least square in order to specify the direction of a radiation source of Example 3.
Fig. 19   is an enlarged view of the vicinity of an azimuth angle 45° of Fig. 18.

## Description of Embodiments

Embodiments of the wearable neutron detector according to the present invention are described below. However, the present invention is not limited to the embodiments adopted here, and proper combinations and improvement can be made without departing from the technical idea of the present invention. The wearable neutron detector of the present invention includes plural neutron detection parts to be arranged at different positions when the detector is worn, a means to compare the counts (counted numbers) of signals detected by the detection parts, and a means to specify a direction of a neutron radiation source from the comparison result.

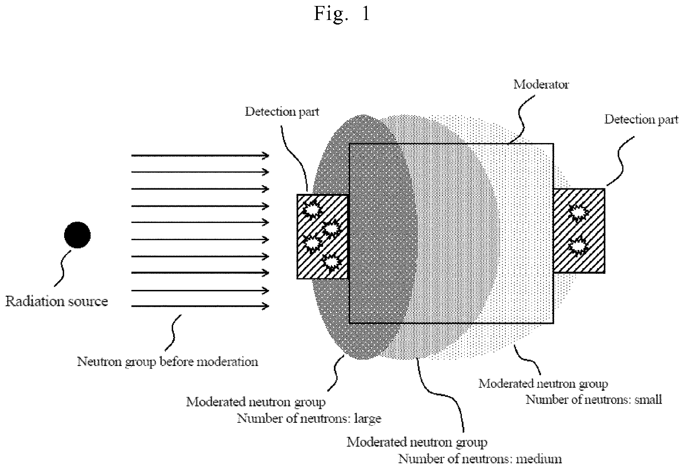

The neutron detection part in the present invention detects neutrons which have been moderated and thereby decreased in energy, so-called thermal neutrons. On that account, of neutrons flying from a radiation source, neutrons directly flying to the detection part are not decreased in energy because they have not been moderated, and therefore, such neutrons are not detected. In Fig. 1, a manner in which the detection parts detect neutrons is shown.

Of neutrons flying from a radiation source, neutrons having been incident on a moderator collide with a material that forms the moderator, and are moderated while giving energy to the collision partner. While being moderated, the neutrons pass through the interior of the moderator and/or are scattered therein, then reach the detection part set to the moderator and are detected. Here, the moderator moderates neutrons and at the same time shields them. Therefore, if the passing distance of neutrons in the interior of the moderator until reaching to the detection part is long, the counts of the neurons are smaller. The present invention applies this phenomenon, and by setting plural neutron detection parts to a moderator and comparing the counts at the plural detection parts, the direction of a neutron radiation source is specified.

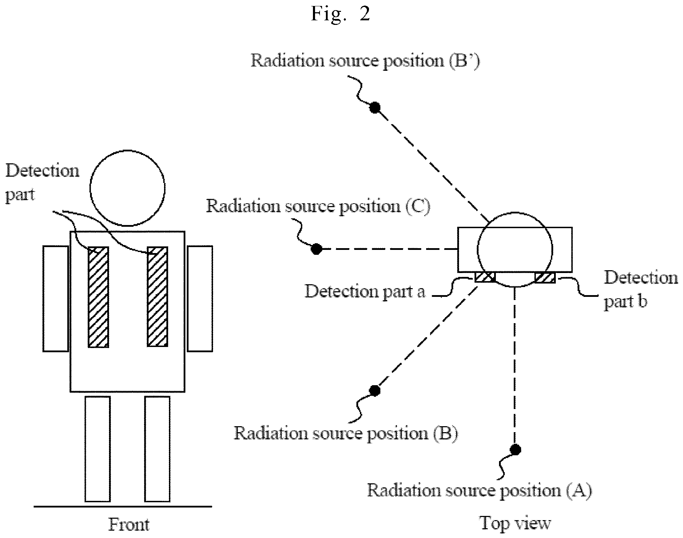

The action mechanism of the neutron detector of the present invention is specifically described below using Figs. 2 to 4. In the figures, the detector is placed on a horizontal plane for convenience of explanation, and embodiments to specify an azimuth angle and an elevation angle are described, but the method for using the neutron detector of the present invention is not limited to the embodiments.

As shown in Fig. 2, for example, two detection parts are set to the chest of a human body having a moderation action. When the radiation source is present at the position (A) on the front, the positions of the two detection parts are symmetric with respect to the radiation source, and therefore, the counts at the two detection parts are the same as each other. On the other hand, when the radiation source is present at the position (C) on the side, the passing distance of neutrons in the moderator until reaching to the detection part "a" is short as compared with the passing distance of neutrons in the moderator until reaching to the detection part "b".

Consequently, the counted number at the detection part "a" becomes large as compared with the counted number at the detection part "b". Also when the radiation source is present at the position (B) that is diagonally in front, the counted number at the detection part "a" becomes large as compared with the counted number at the detection part "b", but the ratio (a/b) of the counted number at the detection part "a" to the counted number at the detection part "b" becomes small as compared with that in the case of the position (C). Therefore, a result of comparison between the counted number at the detection part "a" and the counted number at the detection part "b" in the case where the radiation source is present at each azimuth angle is determined in advance, and this result is collated with a comparison result obtained in the actual measurement, whereby the direction of the radiation source can be specified.

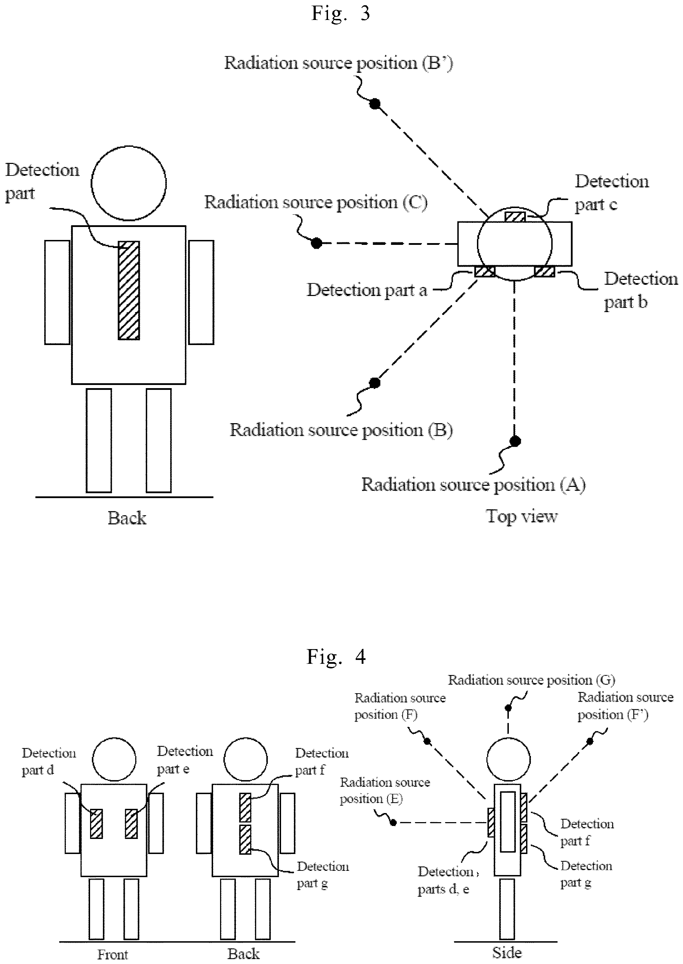

In the embodiment shown in Fig. 2, the result of comparison between the counted number at the detection part "a" and the counted number at the detection part "b" in the case where the radiation source is present at the position (B) that is diagonally in front is analogous to that in the case where the radiation source is present at the position (B') that is diagonally in back, and therefore, it is difficult to specify the direction of the radiation source. Accordingly, it is preferable to use three or more detection parts, as shown in Fig. 3.

In the embodiment shown in Fig. 3, a detection part "c" is set to the back in addition to the detection parts set to the chest. The passing distance of neutrons in the moderator until reaching to the detection part "c" is long in the case where the radiation source is present at the position (B) that is diagonally in front as compared with that in the case where the radiation source is present at the position (B') that is diagonally in back. Therefore, the ratio (each of c/a and c/b) of the counted number at the detection part "c" to the counted number at each of the detection part "a" and the detection part "b" in the case where the radiation source is present at the position (B) that is diagonally in front becomes small as compared with that in the case where the radiation source is present at the position (B') that is diagonally in back.

Accordingly, a result of comparison among the counts at the detection parts a, b and c in the case where the radiation source is present at each azimuth angle is determined in advance, and this result is collated with a comparison result obtained in the actual measurement, whereby the direction of the radiation source can be specified. Therefore, if three or more neutron detection parts are present, the azimuth angle of the incident direction of neutron can be specified in 360° directions.

In the embodiment shown in Fig. 4, two detection parts are set to the chest at the same height from the ground, and two detection parts are set to the back at different heights from the ground. By virtue of this, an elevation angle can be specified in the same principle as that for specifying the azimuth angle of the neutron radiation source. When the radiation source is present at the horizontal position (E), the positions of a detection part "f" and a detection part "g" are symmetric with respect to the radiation source, and therefore, the counts at the two detection parts are the same as each other.

On the other hand, when the radiation source is present at the position (G) overhead, the passing distance of neutrons in the moderator until reaching to the detection part "f" is short as compared with the passing distance of neutrons in the moderator until reaching to the detection part "g". Therefore, the counted number at the detection part "f" becomes large as compared with the counted number at the detection part "g".

Also when the radiation source is present at the position (F) that is diagonally upward, the counted number at the detection part "f" becomes large as compared with the counted number at the detection part "g", but the ratio (f/g) of the counted number at the detection part "f" to the counted number at the detection part "g" becomes small as compared with that in the case of the position (G). Therefore, a result of comparison between the counted number at the detection part "f" and the counted number at the detection part "g" in the case where the radiation source is present at each elevation angle is determined in advance, and this result is collated with a comparison result obtained in the actual measurement, whereby the elevation angle of the radiation source can be specified.

The result of comparison between the counted number at the detection part "f" and the counted number at the detection part "g" in the case where the radiation source is present at the position (F) that is diagonally upward of front is analogous to that in the case where the radiation source is present at the position (F') that is diagonally upward of back, and therefore, it is difficult to specify the direction of the radiation source from the comparison result, but by combining the result of comparison between the detection part "d" and the detection part "e" with the above comparison result, the direction of the radiation source can be specified. That is to say, the passing distance of neutrons in the moderator until reaching to the detection part "d" and the detection part "e" in the case where the radiation source is present at the position (F) that is diagonally upward of front is short as compared with that in the case where the radiation source is present at the position (F') that is diagonally upward of back.

Therefore, the ratio of the counted number at each of the detection part "d" and the detection part "e" to the counted number at each of the detection part "f" and the detection part "g" in the case where the radiation source is present at the position (F) that is diagonally upward of front is large as compared with that in the case where the radiation source is present at the position (F') that is diagonally upward of back. Accordingly, a result of comparison among the counts at the detection parts d, e, f and g in the case where the radiation source is present in each direction is determined in advance, and this result is collated with a comparison result obtained in the actual measurement, whereby the direction of the radiation source can be specified. Therefore, if four or more neutron detection parts are present, the elevation angle can be specified in addition to the azimuth angle, and the detector can function as an all sphere type detector.

As the neutron detection part of the neutron detector according to the present invention, a scintillation detector using a neutron scintillator composed of a resin composition containing an inorganic phosphor and a resin or a neutron scintillator such as LiF/ZnS:Ag, Li glass (manufactured by Saint-Gobain, GS-20 or the like), $Ce:Cs_2LiYCl_6$ or the like, a proportional counter tube, such as a He-3 proportional counter tube, a $BF_3$ proportional counter tube or a boron-coated proportional counter tube, etc. can be used without any restriction.

The scintillation detector is a detector in which a scintillator and a photodetector are connected. In the scintillation detector, the scintillator emits fluorescence according to the number of incident neutrons, and the photodetector that has detected fluorescence converts the fluorescence into electrons and amplifies the electrons. Then, the electrons are output as pulse signals, and from the intensity (pulse height value) of the pulse signals, to thereby the number of neutrons is calculated.

The proportional counter tube is a detector utilizing electron avalanche multiplication in a gas. A cylindrical container is packed with an inert gas, and a high voltage is applied to a core wire strung in the container, thereby allowing the tube to work as a counter tube. By the incidence of neutrons, the gas is ionized, and clouds of primary electrons corresponding to the neutron energy are formed. The electrons are attracted to the electric field and are amplified while repeatedly undergoing acceleration toward the core wire and ionization. When the electrons reach the core wire to generate electric pulses, and the number of neutrons is calculate from the intensity (pulse height value) of the electric pulses and the frequency thereof,

Above all, use of the aforesaid neutron scintillator composed of a resin composition for the neutron detection part is preferable because a neutron detector having a particularly high flexibility in shape can be obtained. The neutron scintillator is disclosed in, for example, WO 2014/092202, and is a neutron scintillator composed of a resin composition containing an inorganic phosphor which contains at least one neutron capture isotope selected from lithium-6 and boron-10, and a resin. Since this scintillator is composed of a resin composition, it has flexibility, and besides, since it is easily deformed by an external force, the neutron detection part can be set to the moderator according to the shape of the moderator.

The neuron detection part of the neutron detector is used by being set to the moderator. There is no specific restriction on the constituents of the moderator as long as the moderator has an action to moderate neutrons. There is no specific restriction also on the shape of the moderator, and any of pillar-like shape, spherical shape, conical shape and shape with depressions and protrusions can be used. In order to improve the accuracy of specifying the direction of the radiation source, it is preferable to adjust the shape of the moderator in such a manner that neutrons can be counted in all the detection parts when a radiation source is placed in each direction that is a measuring object.

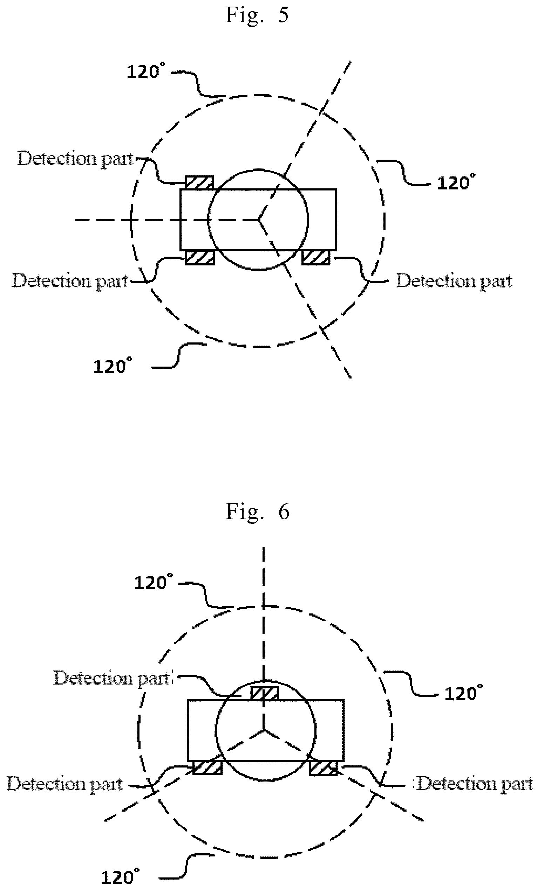

The plural neutron detection parts are arranged at positions that differ from one another when the neutron detector is worn. Here, arranging at different positions refers to an embodiment wherein when the neutron detector is worn, two or more neutron detection parts are not arranged on an arbitrary straight half line extending toward the outside (all direction such as front, back, upward or downward) from the center of the moderator. The arrangement of the neutron detection parts is not specifically restricted as long as the detection parts do not overlap each other. For example, it is preferable that the 360° directions with a central focus on the moderator are equiangularly divided by the number of detection parts to form divided sections, and in each section, one neutron detection part is arranged. That is to say, when the number of neutron detection parts is three, as shown in Fig. 5, it is enough that the 360° directions with a central focus on the moderator are equiangularly divided (every 120°) into three sections, and in each section, one neutron detection part is arranged. By arranging the detection parts in this manner, all directions can be allowed to have detection sensitivity without bias. It is more preferable that the neutron detection parts are arranged at equiangular intervals with a central focus on the moderator, as shown in Fig. 6, and by virtue of this, all directions can be allowed to have detection sensitivity without bias.

In the present invention, wearing of the neuron detector means that the neutron detection part is kept in the vicinity of the surface of the moderator. The distance between the neutron detection part and the moderator surface is not specifically restricted, but in order to specify the incident direction of neutron with high accuracy, it is preferable to shorten the distance between the neutron detection part and the moderator surface. The distance between the neutron detection part and the moderator surface is generally in the range of 0 to 20 cm, preferably 0 to 10 cm, and more preferably 0 to 5 cm.

The means to compare the counts is not specifically restricted, and it is enough that a hitherto known counting method is adopted for each detection part, and the counts at the detection parts are determined and compared with one another. As a specific counting method, a method including amplifying signals output from a detection part of the aforesaid scintillation detector, proportional counter tube or the like by the use of an amplifier or the like, then inputting the signals into a comparator or the like in which a threshold value has been provided, and counting the frequency of the signals exceeding the threshold value is preferably adopted. Moreover, a method including connecting an instrument for carrying out the above counting method to each detection part, obtaining the counts at the detection parts and comparing the counts with one another is preferably adopted.

Hereinafter, a method to specify the direction of a neutron radiation source from the result of comparison of the counts is specifically described, but a method employable in the present invention is not limited to the method described below.

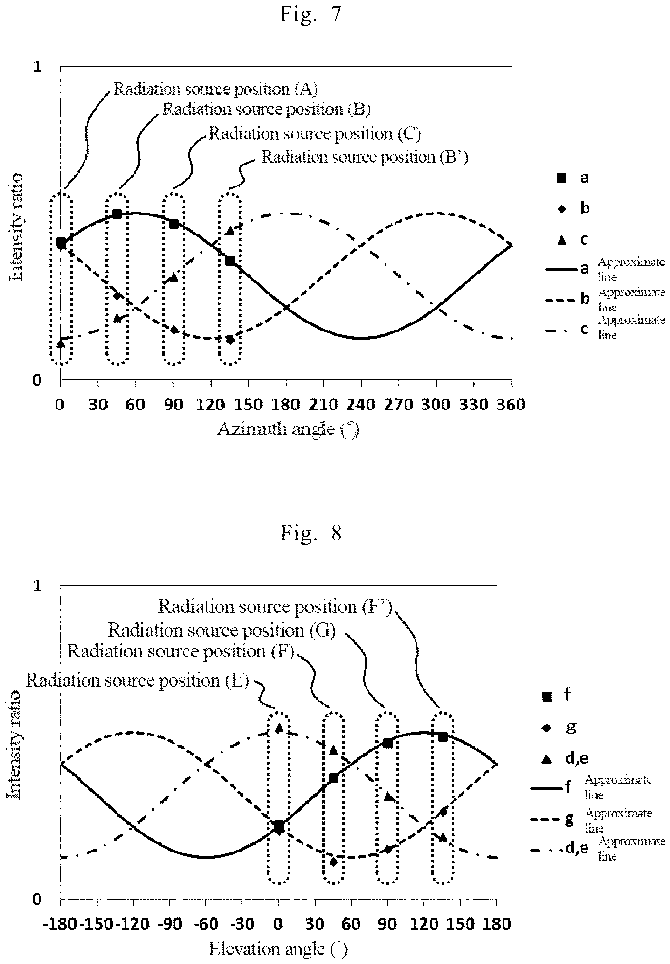

The result of comparison of the counts at the detection parts obtained when a neutron radiation source is placed in each direction in, for example, the embodiment of Fig. 3 is shown in Fig. 7. By collating the comparison result in advance with a comparison result obtained in the actual measurement, the direction of the radiation source can be specified.

In order to simplify the collation, it is preferable that the counted number at each detection part obtained when a neutron radiation source is placed in each direction in advance is expressed by an approximated response function. The counted number at each detection part obtained in Fig. 7 can be expressed by approximating it by a response function of, for example, the following formula (1).

$$N_i = a \cdot \sin(\theta + \alpha_i) + b \qquad (1)$$

($N_i$ is the counted number at the i-th detection part, $\theta$ represents an azimuth angle of the radiation source, $\alpha_i$ is a constant based on the setting position of the i-th detection part, and a and b are each a constant. The i-th detection part means, for example, detection part selected from the detection parts "a" to "g" as mentioned above.)

The calculated value ($N_i$) at each $\theta$ obtained from the formula (1) and the measured value ($N'_i$) of the counted number at the i-th detection part obtained in the actual measurement are collated with each other, then $\theta$ at which the error obtained by the method of least square becomes smallest is determined, and the $\theta$ can be specified as the direction of the radiation source.

Since the response function varies depending upon the type of the detection part used, the shape of the moderator used, etc., it is preferable to properly determine the response function according to the desired embodiment. As the response function, not only the aforesaid trigonometric function but also, for example, the following polynomial can be preferably used.

$$N_i = a_n \cdot (\theta + \alpha_i)^n + a_{n-1} \cdot (\theta + \alpha_i)^{n-1} + \cdots + a_1 \cdot (\theta + \alpha_i) + a_0$$

($N_i$ is the counted number at the i-th detection part, $\theta$ represents an azimuth angle of the radiation source, $\alpha_i$ is a constant

based on the setting position of the i-th detection part, and $a_0$ to $a_n$ are each a constant.)

Next, a method to specify the elevation angle of a neutron radiation source from the result of comparison of the counts is specifically described, but a method employable in the present invention is not limited to the method described below.

The result of comparison of the counts at the detection parts obtained when a neutron radiation source is placed in each direction in, for example, the embodiment of Fig. 4 is shown in Fig. 8. By collating the comparison result in advance with a comparison result obtained in the actual measurement, the elevation angle of the radiation source can be specified.

In order to simplify the collation, it is preferable that the counted number at each detection part obtained when a neutron radiation source is placed at each elevation angle in advance is expressed by an approximated response function. The counted number at each detection part obtained in Fig. 8 can be expressed by approximating it by a response function of, for example, the following formula (1).

$$N_i = a \cdot \cos(\theta + \alpha_i) + b$$

($N_i$ is the counted number at the i-th detection part, $\theta$ represents an elevation angle of the radiation source, $\alpha_i$ is a constant based on the setting position of the i-th detection part, and a and b are each a constant.)

The calculated value ($N_i$) at each $\theta$ obtained from the above formula and the measured value ($N'_i$) of the counted number at the i-th detection part are collated with each other, then $\theta$ at which the error obtained by the method of least square becomes smallest is determined, and the $\theta$ can be specified as the elevation angle of the radiation source.

The response function varies depending upon the type of the detection part used, the shape of the moderator used, etc., and therefore, it is preferable to properly determine the response function according to the desired embodiment. As the response function, not only the aforesaid trigonometric function but also, for example, the following polynomial can be preferably used.

$$N_i = a_n \cdot (\theta + \alpha_i)^n + a_{n-1} \cdot (\theta + \alpha_i)^{n-1} + \cdots + a_1 \cdot (\theta + \alpha_i) + a_0$$

($N_i$ is the counted number at the i-th detection part, $\theta$ represents an elevation angle of the radiation source, $\alpha_i$ is a constant based on the setting position of the i-th detection part, and $a_0$ to $a_n$ are each a constant.)

The shape of the wearable neutron detector of the present invention is appropriately determined according the shape of the wearing object (human body etc.). However, in order to simplify wearing or in order to enhance mechanical strength while maintaining mobility of the neutron detection part and flexibility thereof, it is preferable to fix the neutron detection part to a flexible cloth-like material such as cloth. Furthermore, in consideration of usability when the detector is worn by a human body, the cloth-like material particularly preferably has a shape of top clothing, such as a shirt, a vest, a coat or a jacket.

Accordingly, preferred embodiments of the wearable neutron detector of the present invention include:

an embodiment wherein plural neutron detection parts are set on the front side of a cloth-like material having a shape of top clothing, as shown in Fig. 2,
an embodiment wherein plural neutron detection parts are set on the front side of a cloth-like material having a shape of top clothing, and further, one or more neutron detection parts are set on the back side thereof, as shown in Fig. 3, and
an embodiment wherein plural neutron detection parts are set on the front side of a cloth-like material having a shape of top clothing, and further, plural neutron detection parts are set on the back side thereof, as shown in Fig. 4.

Particularly in the last embodiment, it is preferable that on the front side, the plural neutron detection parts are set side by side in the horizontal direction, and on the back side, the plural neutron detection parts are set side by side in the vertical direction.

In the present invention, as the number of the neutron detection parts to be set is increased, the direction of a radiation source can be specified more accurately. However, if the number of the neutron detection parts is increased, the weight is increased, and the activity may be decreased when the detector is worn. In addition, processing of signals from the detection parts may be complicated, if the number of the neutron detection parts is increased. Therefore, the number and the arrangement of the neutron detection parts may be appropriately changed according to downsizing of the detection parts such as scintillator and enhancement of a signal processing rate.

The positions for setting the neutron detection parts are as described above, but the positions for setting other devices are not specifically restricted. For example, it is preferable to provide a display equipment so that the wearer can directly confirm the specified position of the neutron radiation source, and it is particularly preferable to provide a wireless display equipment having such a size as is held in a palm of a hand in consideration of operability.

## Example 1

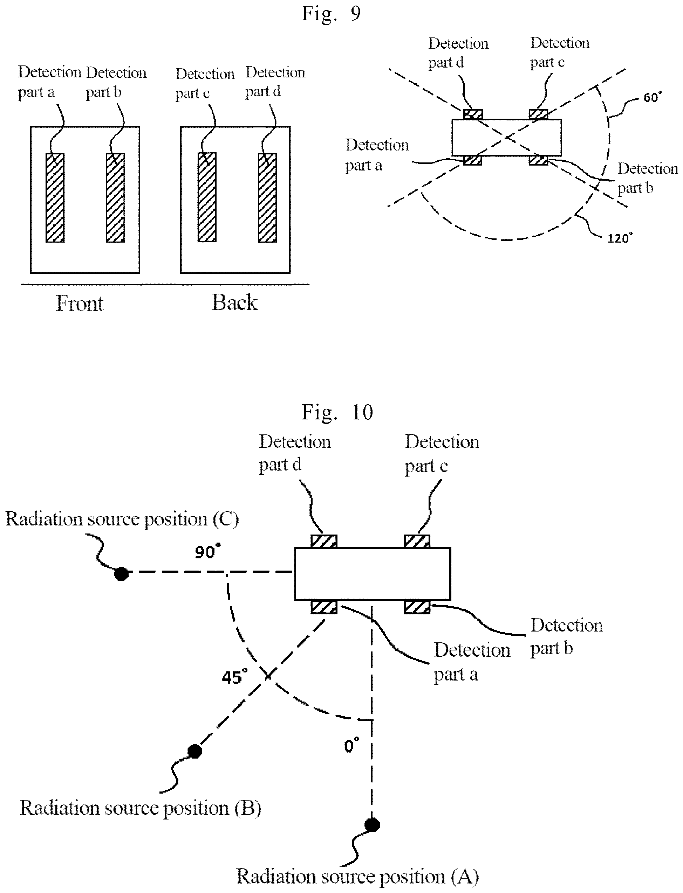

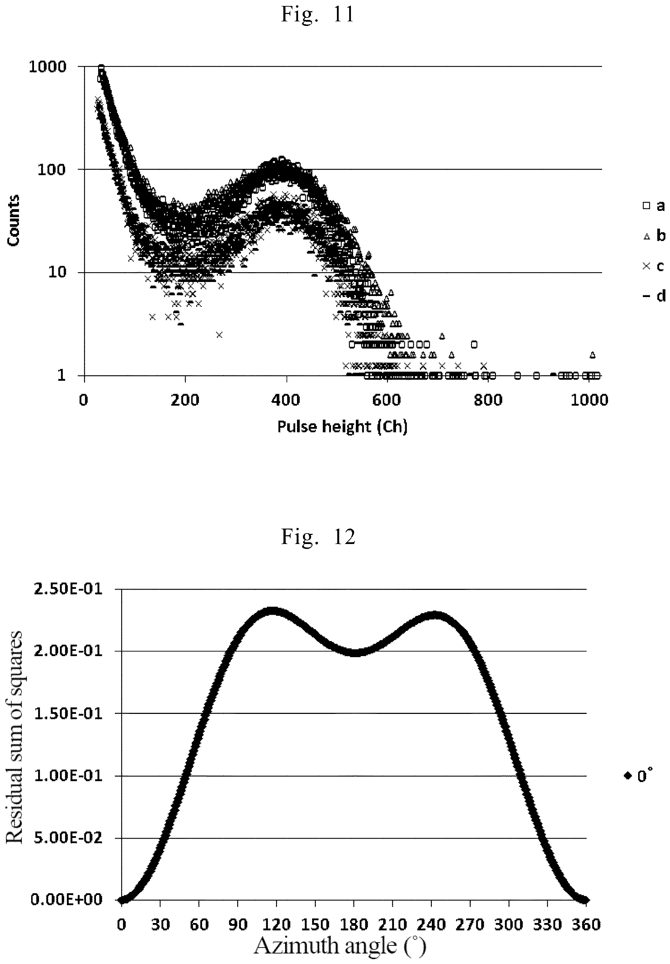

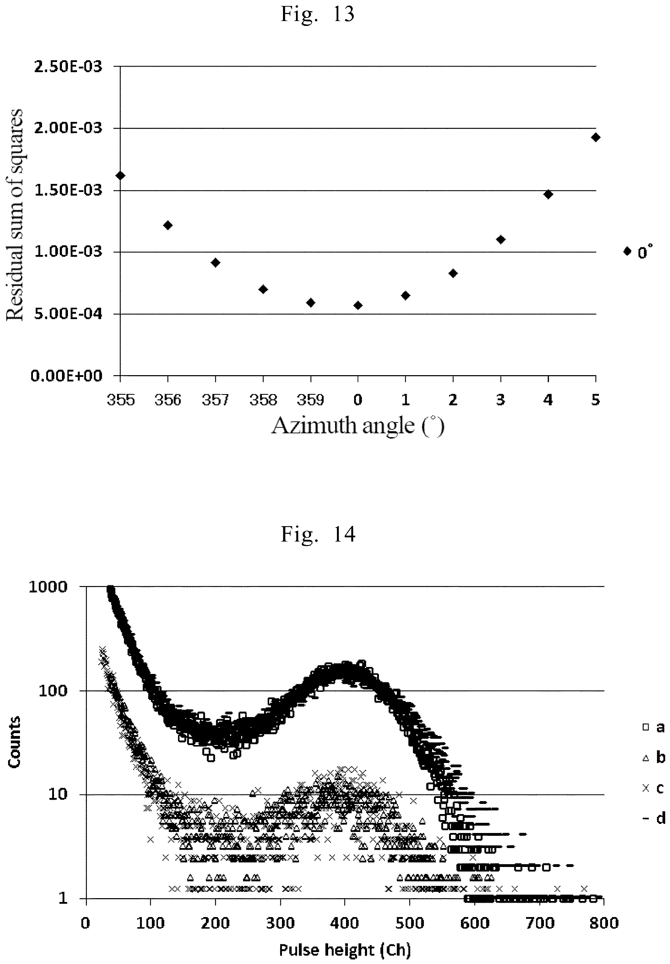

An example of the above-described neutron incident direction detector of the present invention is described. As the moderator, high-density polyethylene was prepared. As the neutron scintillator, a neutron scintillator composed of a resin composition containing an inorganic phosphor and a resin was used, and this scintillator was connected to a photodetector to form a neutron detection part.
Four neutron detection parts were prepared, and they were set to the moderator.
The 360° directions with a central focus on the moderator were equiangularly divided (every 90°) into four sections, and in each section, one neutron detection part was arranged. Specifically, as shown in Fig. 9, the neutron detection parts were set in such a manner that, from the view of the central point, the angle between the detection part "a" and the detection part "b" and the angle between the detection part "c" and the detection part "d" each became 120°, and that the angle between the detection part "a" and the detection part "d" and the angle between the detection part "b" and the detection part "c" each became 60°. Here, the angle of a position from which the detection part "a" and the detection part "b" on the moderator were seen at the same time was set to be a reference angle 0°, the angle of a position from which the detection part "a" and the detection part "d" were seen at the same time was set to be 90°, and the angle of a position obtained by equally dividing between the above positions in half was set to be 45°.
A neutron radiation source was arranged at the radiation source position (A) that was in the direction of almost 0° when seen from the moderator, as shown in Fig. 10, and neutrons were detected. As a result, such pulse height distribution spectra as in Fig. 11 were obtained from the neutron detection parts. From the resulting each spectrum, a frequency of signals exceeding a threshold value was counted, and the counts at the neutron detection parts were compared.
The above comparison result and a result of comparison of the counts at the detection parts in the case where a radiation source was placed at each azimuth angle in advance were collated with each other to thereby specify the direction of the radiation source. In this example, the counted number at each detection part in the case where a radiation source was placed in advance at each azimuth angle was expressed by a response function of the aforesaid formula (1), then the calculated value ($N_i$) at each $\theta$ obtained from the response function was collated with the measured value ($N'_i$) of the counted number at the i-th detection part, the measured value being obtained by the actual measurement, and $\theta$ at which the error obtained by the method of least square became smallest was determined.
That is to say, a residual sum of squares $\{\Sigma(N_i-N'_i)^2\}$ of the calculated value and the measured value was calculated every azimuth angle 1°, and an azimuth angle at which the residual sum of squares became smallest was taken as a direction of the radiation source. The residual sum of squares at each azimuth angle was shown in Fig. 12 and Fig. 13. From this result, the direction of the radiation source was specified as an azimuth angle 0°.

## Example 2

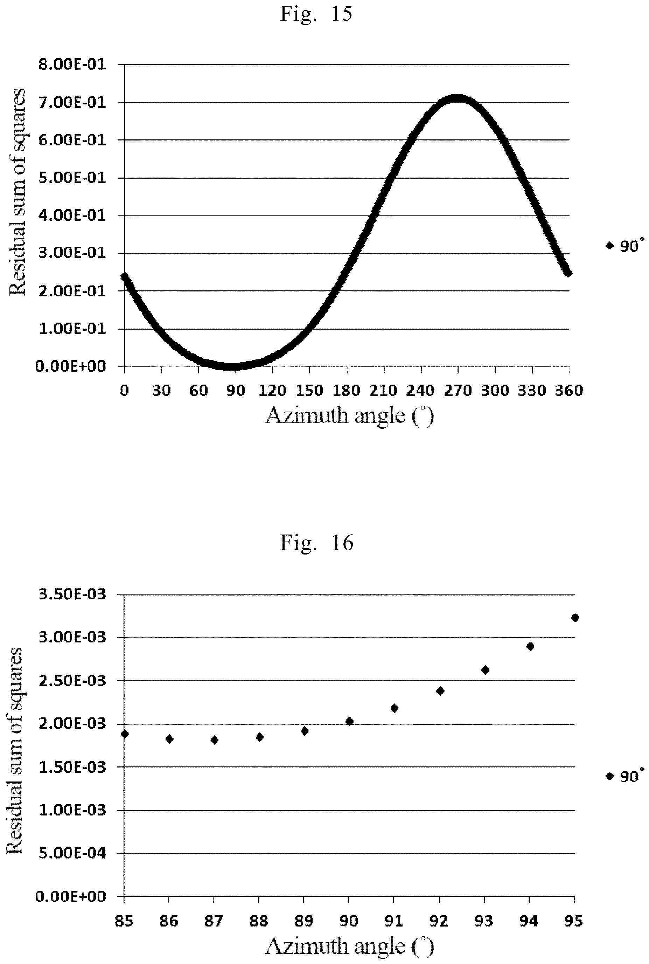

The same setting as in Example 1 was carried out, and a neutron radiation source was arranged at the radiation source position (C) that was in the direction of almost 90° when seen from the moderator, as shown in Fig. 10, and neutrons were detected. From the neutron detection parts, such pulse height distribution spectra as in Fig. 14 were obtained. From the resulting each spectrum, a frequency of signals exceeding a threshold value was counted, and the counts at the neutron detection parts were compared.
The above comparison result and a result of comparison of the counts at the detection parts in the case where a radiation source was placed at each azimuth angle in advance were collated with each other to thereby determine the direction of the radiation source. As a result, the direction of the radiation source was specified as an azimuth angle 87°, as shown in Fig. 15 and Fig. 16.

## Example 3

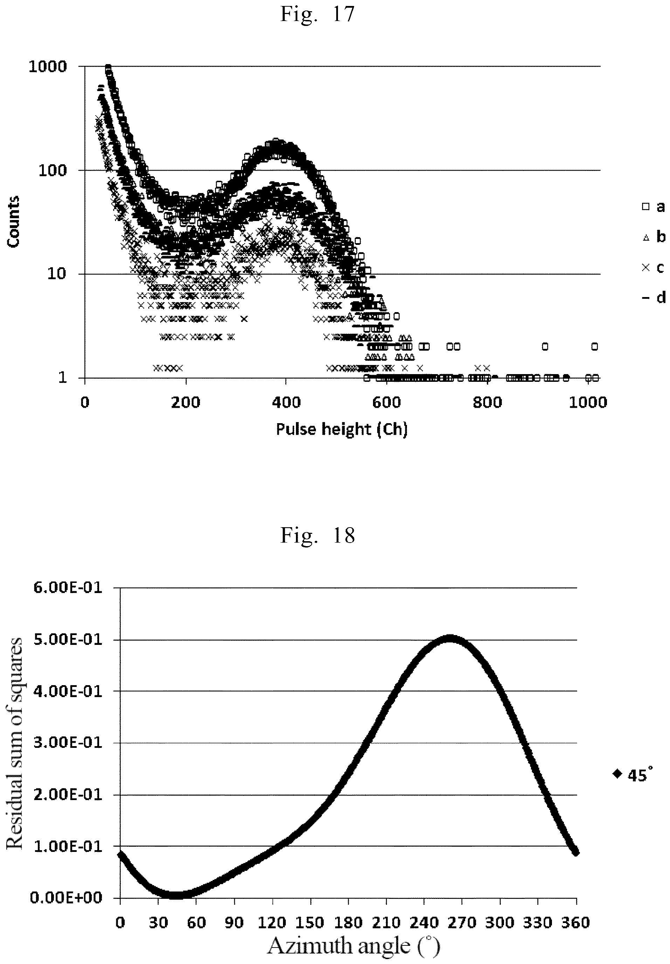

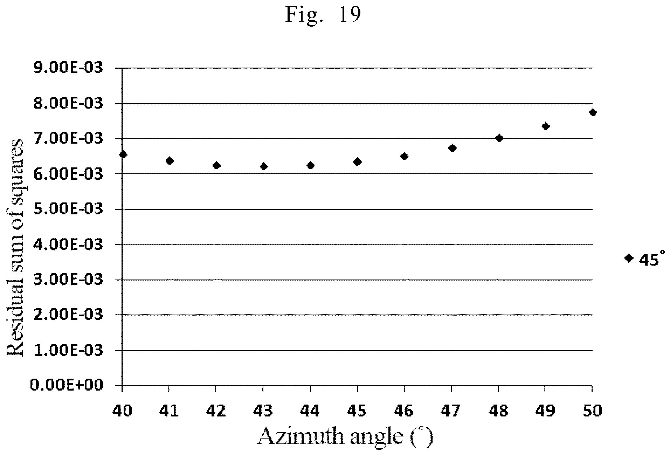

The same setting as in Example 1 was carried out, and a neutron radiation source was arranged at the radiation source position (B) that was in the direction of almost 45° when seen from the moderator, as shown in Fig. 10, and neutrons were detected. From the neutron detection parts, such pulse height distribution spectra as in Fig. 17 were obtained. From the resulting each spectrum, a frequency of signals exceeding a threshold value was counted, and the counts at the neutron detection parts were compared.
The above comparison result and a result of comparison of the counts at the detection parts in the case where a radiation source was placed at each azimuth angle in advance were collated with each other to thereby determine the direction of the radiation source. As a result, the direction of the radiation source was specified as an azimuth angle 43°, as shown in Fig. 18 and Fig. 19.

**Claims**

1. A wearable neutron detector used by being worn, comprising plural neutron detection parts to be arranged at different positions when the detector is worn, a means to compare the counts of signals detected by the detection parts, and a means to specify a direction of a neutron radiation source from the comparison result.

2. The wearable neutron detector according to claim 1, wherein the neutron detection parts are set onto a flexible cloth-like material.

3. The wearable neutron detector according to claim 2, wherein the flexible cloth-like material has a shape of top clothing.

4. The wearable neutron detector according to claim 3, wherein plural neutron detection parts are set on the front side of the cloth-like material having a shape of top clothing.

5. The wearable neutron detector according to claim 4, wherein one or more neutron detection parts are set on the back side.

6. The wearable neutron detector according to claim 4, wherein plural neutron detection parts are set on the back side.

7. The wearable neutron detector according to claim 6, wherein on the front side, plural neutron detection parts are set side by side in the horizontal direction, and on the back side, plural neutron detection parts are set side by side in the vertical direction.

Fig. 1

# Fig. 2

Radiation source position (B')

Detection part

Radiation source position (C)

Detection part a

Detection part b

Radiation source position (B)

Radiation source position (A)

Front

Top view

Fig. 3

Radiation source position (B')

Detection
part

Radiation source position (C)

Detection
part c

Detection part a

Detection
part b

Radiation source position (B)

Radiation source position (A)

Back

Top view

Fig. 4

Radiation source position (G)

Radiation source
position (F)

Radiation source
position (F')

Detection
part d

Detection
part e

Detection
part f

Radiation source
position (E)

Detection
part f

Detection
part g

Detection
parts d, e

Detection
part g

Front

Back

Side

## Fig. 5

120°

Detection part

120°

Detection part

Detection part

120°

## Fig. 6

120°

Detection part

120°

Detection part

Detection part

120°

Fig. 7

Fig. 8

# Fig. 9

Detection part a    Detection part b      Detection part c    Detection part d

Front          Back

Detection part d    Detection part c

60°

Detection part a

Detection part b

120°

# Fig. 10

Detection part d            Detection part c

Radiation source position (C)

90°

45°

0°

Detection part a

Detection part b

Radiation source position (B)

Radiation source position (A)

Fig. 11

Fig. 12

Fig. 13

Fig. 14

Fig. 15

Fig. 16

Fig. 17

Fig. 18

Fig. 19

Europäisches
Patentamt

European
Patent Office

Office européen
des brevets

# EUROPEAN SEARCH REPORT

Application Number

EP 17 18 1828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 770 342 A1 (SYMETRICA LTD [GB]) 27 August 2014 (2014-08-27) * paragraphs [0030] - [0032], [0035], [0036], [0054], [0055] * * figures 1-3,6 * | 1-7 | INV. G01T1/29 G01T3/06 |
| A | EP 1 956 392 A1 (NAT INST RADIOLOG [JP]; ALOKA CO LTD [JP]) 13 August 2008 (2008-08-13) * paragraphs [0047], [0049] * * figures 1,5-9 * | 1-7 | |
| A | WO 2008/082389 A1 (PRATT & WHITNEY ROCKETDYNE INC [US]; ZILLNER ANDREW J [US]; JOHNSON GR) 10 July 2008 (2008-07-10) * page 3, line 8 - page 4, line 14 * * figures 1,2 * | 1-7 | |
| A | US 5 321 269 A (KITAGUCHI HIROSHI [JP] ET AL) 14 June 1994 (1994-06-14) * column 8, line 62 - column 9, line 5 * * figures 1,3 * | 1 | TECHNICAL FIELDS SEARCHED (IPC) G01T G01V |

The present search report has been drawn up for all claims

| Place of search | Date of completion of the search | Examiner |
|---|---|---|
| The Hague | 31 October 2017 | Wulveryck, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 1828

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2017

| Patent document cited in search report | | Publication date | Patent family member(s) | | Publication date |
|---|---|---|---|---|---|
| EP 2770342 | A1 | 27-08-2014 | EP | 2770342 A1 | 27-08-2014 |
| | | | GB | 2511107 A | 27-08-2014 |
| | | | US | 2017184736 A1 | 29-06-2017 |
| EP 1956392 | A1 | 13-08-2008 | CN | 101198886 A | 11-06-2008 |
| | | | EP | 1956392 A1 | 13-08-2008 |
| | | | JP | 4127840 B2 | 30-07-2008 |
| | | | JP | 2007155332 A | 21-06-2007 |
| | | | US | 2009271143 A1 | 29-10-2009 |
| | | | WO | 2007063790 A1 | 07-06-2007 |
| WO 2008082389 | A1 | 10-07-2008 | NONE | | |
| US 5321269 | A | 14-06-1994 | DE | 4190941 C2 | 26-07-2001 |
| | | | DE | 4190941 T | 23-04-1992 |
| | | | JP | 3140052 B2 | 05-03-2001 |
| | | | JP | 2000147129 A | 26-05-2000 |
| | | | US | RE35908 E | 29-09-1998 |
| | | | US | 5321269 A | 14-06-1994 |
| | | | WO | 9117462 A1 | 14-11-1991 |

For more details about this annex : see Official Journal of the European Patent Office, No. 12/82

**EP 3 273 273 A1**

**REFERENCES CITED IN THE DESCRIPTION**

**Patent documents cited in the description**

- JP 2008134200 A
- US 5345084 A
- US 5659177 A
- WO 2014092202 A